# FASCICULE DE BREVET EUROPEEN

(11) **EP 4 197 918 B1**
(45) Date de publication et mention de la délivrance du brevet: **21.08.2024**
(21) Numéro de dépôt: 22206537.7
(22) Date de dépôt: 10.11.2022
(51) Int. Cl.: B64F 5/10, B64C 3/26, B64C 1/12

(54) **PIÈCE DE COIN FLEXIBLE DESTINÉE À CONTRIBUER À UNE LIAISON ENTRE AU MOINS TROIS PAROIS D' AU MOINS UN CAISSON D' AÉRONEF**
FLEXIBLES ECKSTÜCK ZUR UNTERSTÜTZUNG EINER VERBINDUNG ZWISCHEN MINDESTENS DREI WÄNDEN MINDESTENS EINES FLUGZEUGGEHÄUSES
FLEXIBLE CORNER PIECE FOR CONTRIBUTING TO A CONNECTION BETWEEN AT LEAST THREE WALLS OF AT LEAST ONE AIRCRAFT BOX

(30) Priorité: 16.12.2021 FR 2113634
(43) Date de publication de la demande: 21.06.2023
(73) Titulaire: AIRBUS OPERATIONS (S.A.S.), 31060 Toulouse (FR)
(72) Inventeur: GOUPIL, Frédéric, 31060 TOULOUSE (FR); TONNELE, Arnaud, 31060 TOULOUSE (FR); MAQUEDA LAHOZ, Javier, 31060 TOULOUSE (FR); FAUCHILLE, Vincent, 31300 TOULOUSE (FR); BEAU, Carole, 31060 TOULOUSE (FR)
(74) Mandataire: Airbus-OPS SAS

(56) Documents cités:
- CA-A1- 2 763 531
- FR-A1- 2 872 781
- FR-A1- 3 091 259
- US-A1- 2004 155 002

## Description

### Domaine technique

La présente invention concerne une pièce de coin flexible et étanche à tout fluide comme par exemple un carburant, ainsi qu'un procédé de fabrication de ladite pièce de coin.

### État de la technique

Un réservoir structurel d'aéronef tel qu'un caisson central de voilure (« central wing box » en anglais) ou un caisson externe de voilure (« outer wing box » en anglais) correspond à un dispositif structurel complexe comprenant un ensemble de parties structurelles métalliques ou composites d'épaisseurs variées assemblées par des pièces de fixation.

Une pièce de coin est utilisée pour assembler les différentes parties structurelles au niveau des coins où trois parties structurelles se rencontrent. Cette pièce de coin de l'art antérieur, telle que divulguée dans les documents FR 2 872 781 A1 et FR 3 091 259 A1, correspond à une pièce structurelle rigide comprenant trois surfaces de contact qui assure à la fois une étanchéité et une résistance aux charges du dispositif structurel.

Une installation correcte d'une telle pièce de coin est complexe et demande beaucoup de temps. En effet, deux cellules (« airframe » en anglais) d'aéronef ne présentent pas toujours la même géométrie. Si la pièce de coin rigide est assemblée à ses trois surfaces de contact sans ajustement de ces surfaces de contact, il serait impossible de combler les espaces entre les parties du dispositif structurel et les surfaces de contact de la pièce de coin.

Dans un premier art antérieur, pour chaque aéronef à assembler, on usine les surfaces de contact de la pièce de coin afin d'adapter sa forme à la forme du dispositif structurel à assembler. Cela implique que des mesures doivent être réalisées après que les structures principales de l'aéronef ont été assemblées. Une fois les mesures réalisées, l'assemblage doit s'arrêter pendant que la pièce de coin est usinée à partir des mesures. De plus, la pièce de coin une fois usinée doit être repeinte et subir encore un traitement de surface car l'usinage aura altéré la surface de la pièce de coin. Toutes ces opérations sont onéreuses et entraînent une augmentation du délai du procédé d'assemblage de la cellule d'aéronef.

Selon un deuxième art antérieur, l'ajustement de la pièce de coin est réalisé à l'aide de cales d'épaisseur (« shim » en anglais). Cela permet d'éviter de repeindre la pièce de coin et d'effectuer encore un traitement de surface à la pièce de coin car il n'est pas nécessaire de l'usiner. Toutefois, cela implique la fabrication de cales d'épaisseur adaptées, ce qui entraîne également des délais importants du procédé d'assemblage de la cellule. Par ailleurs, l'utilisation de cales d'épaisseur complique l'application de matériau d'étanchéité sur la pièce de coin.

Dans tous les cas, la nécessité d'ajuster la pièce de coin entraîne souvent des délais d'assemblage importants.

### Exposé de l'invention

La présente invention a pour objet de remédier à cet inconvénient. Pour cela, elle concerne une pièce de coin destinée à contribuer à une liaison entre au moins trois parois d'au moins un caisson d'aéronef.

Selon l'invention, la pièce de coin comporte au moins trois plaques de fixation et au moins une arête en matière flexible, chacune des au moins trois plaques de fixation présentant une surface externe destinée à être fixée respectivement à une paroi du ou des caissons, chacune des au moins trois plaques de fixation étant connectée à chacune des autres au moins trois plaques de fixation par une arête en matière flexible, les trois plaques de fixation étant fabriquées dans une matière plus rigide que la matière flexible des arêtes permettant un mouvement d'une plaque par rapport à une autre.

Ainsi, grâce aux arêtes en matière flexible de la pièce de coin, l'ajustement est assuré par la flexibilité des arêtes. Il n'est plus nécessaire d'usiner la pièce de coin, ni d'ajouter des cales d'épaisseur. Les délais d'assemblage s'en trouvent diminués de façon importante. De plus, les arêtes contribuent à l'étanchéité au fluide procurée par la pièce de coin.

Selon un mode de réalisation, au moins une des au moins trois plaques de fixation comprend au moins un site de perçage destiné à être percé pour former une ouverture de fixation configurée pour laisser un passage d'un élément de fixation, la pièce de coin comportant au moins un joint torique en matière flexible surmoulé autour d'au moins un site de perçage, la surface externe des au moins trois plaques présentant une rainure circulaire usinée autour du ou des sites de perçage, le ou les joints toriques étant surmoulés au fond de la rainure circulaire.

Selon un autre mode de réalisation, au moins une des au moins trois plaques de fixation comprend au moins une ouverture de fixation configurée pour laisser un passage d'un élément de fixation, la pièce de coin comportant au moins un joint torique en matière flexible surmoulé autour d'au moins une ouverture de fixation, la surface externe des au moins trois plaques présentant une rainure circulaire usinée autour de la ou des ouvertures, le ou les joints toriques étant surmoulés au fond de la rainure circulaire.

Par ailleurs, la pièce de coin comporte au moins un cordon périphérique d'étanchéité en matière flexible, le ou les cordons périphériques partageant en deux parties chaque surface externe tout en formant globalement une boucle fermée, la pièce de coin comportant au moins une rainure périphérique passant sur la surface externe de chacune des au moins trois plaques de fixation, la ou les rainures périphériques formant chacune une boucle fermée faisant le tour de la pièce de coin en passant sur chacune des surfaces externe, un seul cordon périphérique étant surmoulé au fond de chacune des rainures périphériques.

Selon une particularité, au moins une plaque de fixation comprend au moins deux portions connectées entre elles par un joint de séparation en matière flexible, le joint de séparation en matière flexible étant connecté à au moins une arête de la pièce de coin.

De plus, la matière flexible correspond à un matériau hyperélastique incompressible.

Avantageusement, la matière flexible correspond à un élastomère.

L'invention concerne également un aéronef, en particulier un avion de transport, comprenant au moins un caisson présentant au moins un coin sur lequel est fixée une pièce de coin telle que décrite ci-dessus.

L'invention concerne également un procédé de fabrication d'une pièce de coin. Selon l'invention, le procédé comprend les étapes suivantes :
- une étape de mise en place d'au moins trois plaques de fixation présentant une surface externe destinée à être fixée respectivement à une paroi du ou des caissons, chacune des au moins trois plaques de fixation étant mise en place de façon que chaque surface externe soit configurée pour pouvoir être fixée respectivement à une paroi du ou des caissons,
- une étape de surmoulage d'au moins une arête à au moins trois plaques de fixation de façon que chacune des au moins trois plaques de fixation soit connectée à chacune des autres au moins trois plaques de fixation par une arête en matière flexible, la matière des plaques de fixation étant plus rigide que la matière des arêtes.

### Brève description des figures

Les figures annexées feront bien comprendre comment l'invention peut être réalisée. Sur ces figures, des références identiques désignent des éléments semblables.
La figure 1 représente une vue en perspective d'un mode de réalisation de la pièce de coin. La vue est dirigée vers les surfaces externes des plaques de fixation.
La figure 2 représente une coupe transversale d'une pièce de coin à travers une ouverture de fixation et d'un joint torique entourant l'ouverture de fixation.
La figure 3 représente une coupe transversale d'une pièce de coin à travers une un cordon périphérique et une rainure périphérique.
La figure 4 représente une vue en perspective d'une pièce de coin installée sur un coin d'un caisson.
La figure 5 représente une vue en perspective d'un mode de réalisation d'une pièce de coin comportant des surfaces d'appui de hauteurs différentes. La vue est dirigée vers les surfaces internes (des plaques de fixation) opposées aux surfaces externes.
La figure 6 représente une vue en perspective d'un mode de réalisation d'une pièce de coin comportant des plaques de fixation présentant deux portions jointes par un joint de séparation. La vue est dirigée vers les surfaces internes des plaques de fixation.
La figure 7 représente une vue éclatée en perspective d'une paroi et son caisson destinés à être fixés entre eux par des pièces de coin.
La figure 8 représente une vue éclatée en perspective d'une paroi de caisson et des pièces de coin destinées à être fixées à la paroi.
La figure 9 représente une vue en perspective d'une pièce de coin fixée à des parois d'au moins un caisson.
La figure 10 représente une coupe transversale d'une pièce de coin fixée sur deux parois d'au moins un caisson dans un mode de fixation par cisaillement et par double recouvrement.
La figure 11 représente un aéronef et un tronçon de fuselage de l'aéronef comportant un caisson, en particulier un caisson central de voilure.
La figure 12 représente une vue en perspective d'un mode de réalisation de la pièce de coin. La vue est dirigée vers les surfaces externes des plaques de fixation.

### Description détaillée

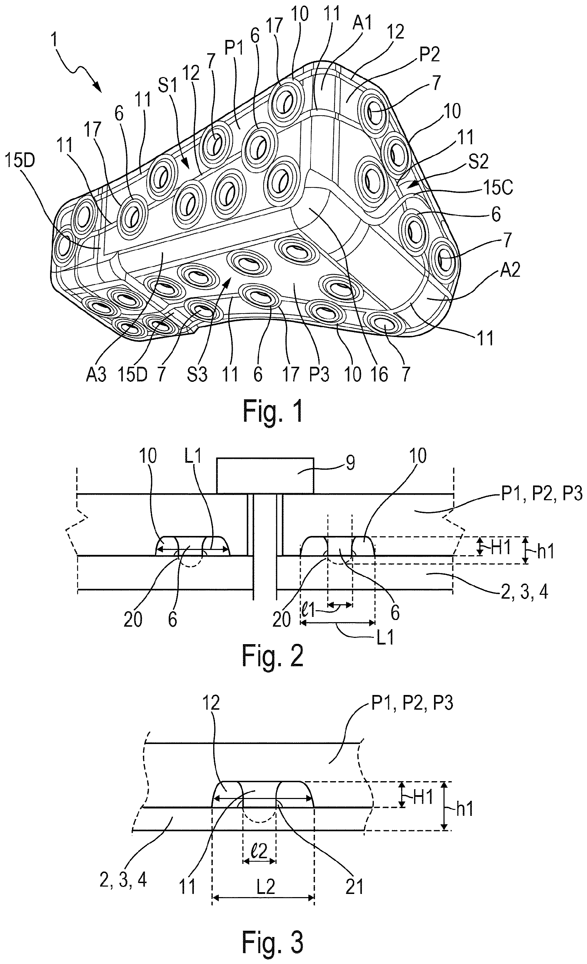

Un mode de réalisation de la pièce de coin 1 (« corner fitting » en anglais) est représenté sur la figure 1.

La pièce de coin 1 a pour but d'assurer, entre autres, une étanchéité au carburant pour un réservoir tel qu'un caisson 5 central de voilure ou un caisson 5 externe de voilure d'aéronef, en particulier un avion de transport, tout en étant capable d'absorber les tolérances de montage et les petits déplacements relatifs pouvant apparaître en fonctionnement. Le ou les caissons 5 peuvent correspondre à un ou des caissons fermés ou ouverts. Dans la suite de la description, on appellera « caisson 5 », le caisson central de voilure ou le caisson externe de voilure.

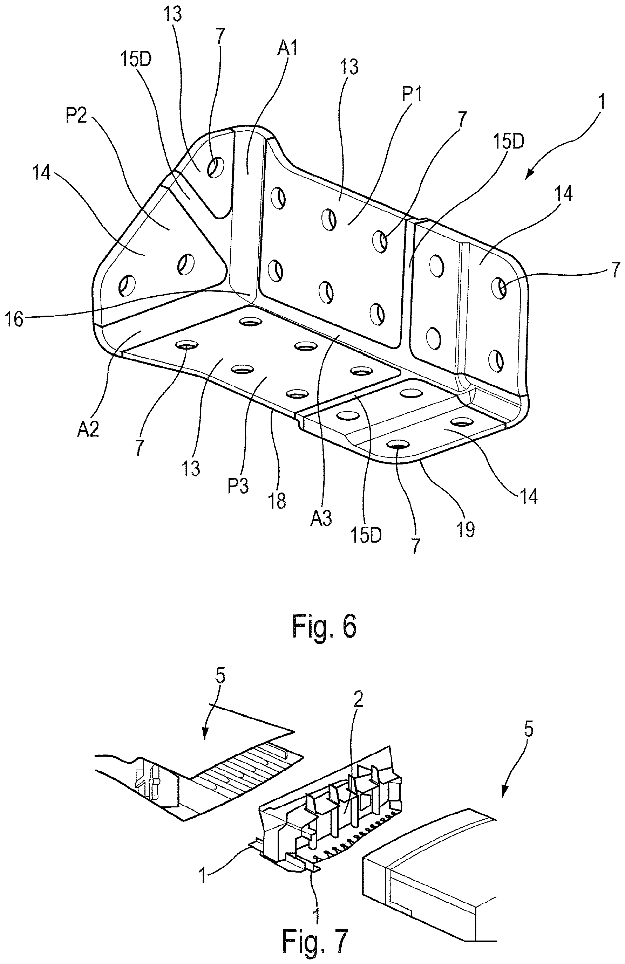

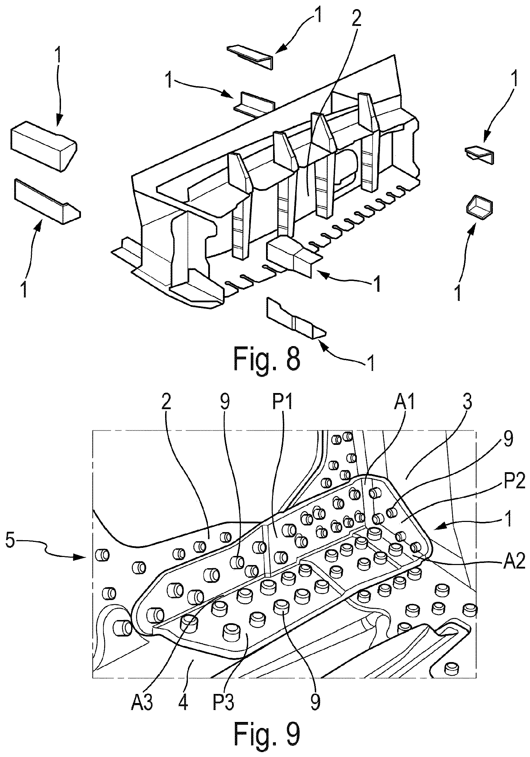

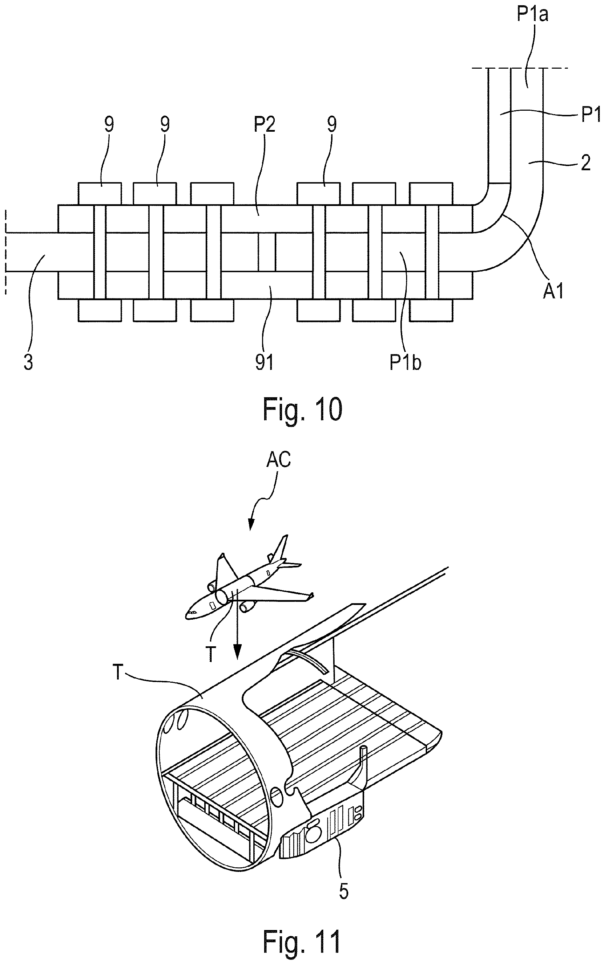

La figure 11 représente un tronçon de fuselage T d'un aéronef AC comprenant au moins un caisson 5 sur lequel ou les quels au moins une pièce de coin 1 est fixée, comme représenté sur la figure 7 et la figure 8. La pièce de coin 1 peut être utilisée pour joindre des parois 2, 3, 4 d'un caisson 5 ou de plusieurs caissons 5.

La pièce de coin 1 comporte au moins trois plaques de fixation P1, P2, P3 (rigides) et au moins trois arêtes A1, A2, A3 en matière flexible. Chacune des au moins trois plaques de fixation P1, P2, P3 présente une surface externe S1, S2, S3 destinée à être fixée respectivement à une paroi 2, 3, 4 du ou des caissons 5, par exemple à l'aide d'au moins un élément de fixation 9 (figure 2 et figure 9).

De façon non limitative, un élément de fixation 9 peut correspondre à un rivet ou une vis.

Chacune des au moins trois plaques de fixation P1, P2, P3 est connectée à chacune des autres au moins trois plaques de fixation P1, P2, P3 par une arête A1, A2, A3 en matière flexible. La matière flexible peut correspondre à tout matériau hyperélastique incompressible. Par exemple, la matière flexible peut correspondre à un élastomère. Les plaques de fixation P1, P2, P3 sont fabriquées en matière rigide et donc en matière plus rigide que la matière flexible des arêtes A1, A2, A3 de manière que la flexibilité des arêtes permette un mouvement d'une plaque par rapport à une autre et ainsi un ajustement de positionnement des plaques par rapport au caisson d'aéronef concerné pour permettre d'absorber les tolérances de montage. Selon une forme de réalisation possible, la matière rigide choisie pour les plaques présente un module d'élasticité en mégapascals (MPa) au moins mille fois supérieur au module d'élasticité de la matière choisie pour les arêtes. Selon un exemple de matériau, les plaques de fixation P1, P2, P3 sont fabriquées en métal, tel que l'aluminium. Les plaques de fixation P1, P2 P3 peuvent aussi être fabriquées en matériau composite plus rigide que le matériau flexible des arêtes A1, A2, A3.

Les plaques de fixation P1, P2, P3 sont ainsi liées entre elles seulement par une arête A1, A2, A3 en matière flexible. Aucun lien structurel, à part les arêtes A1, A2, A3 ne lie entre elles les plaques de fixation P1, P2, P3.

Les plaques de fixation P1, P2, P3 peuvent être sensiblement perpendiculaires l'une par rapport à l'autre. Selon une variante, les plaques de fixation P1, P2, P3 ne sont pas perpendiculaires l'une par rapport à l'autre. La position des plaques de fixation P1, P2, P3 l'une par rapport à l'autre dépend de la position des parois 2, 3, 4 du ou des caissons 5 l'une par rapport à l'autre.

Les arêtes A1, A2, A3 sont formées de bandes continues. Par ailleurs, les arêtes A1, A2, A3 se rejoignent toutes au sommet 16 de la forme de la pièce de coin 1. Cela contribue à l'étanchéité procurée par la pièce de coin 1 tout en apportant la possibilité de petits mouvements relatifs entre les plaques de fixation P1, P2, P3. Ainsi, dans le cas où la pièce de coin 1 comprend trois plaques de fixation P1, P2, P3, elle correspond à une forme de coin présentant trois faces, par exemple, sensiblement perpendiculaire l'une par rapport à l'autre. Les arêtes A1, A2, A3 de cette forme de coin sont en matière flexible. Sur la figure 1, la figure 4, la figure 5 et la figure 6, la plaque de fixation P1 est connectée à la plaque de fixation P2 par l'arête A1. La plaque de fixation P2 est connectée à la plaque de fixation P3 par l'arête A2. La plaque de fixation P3 est connectée à la plaque de fixation P1 par l'arête A3.

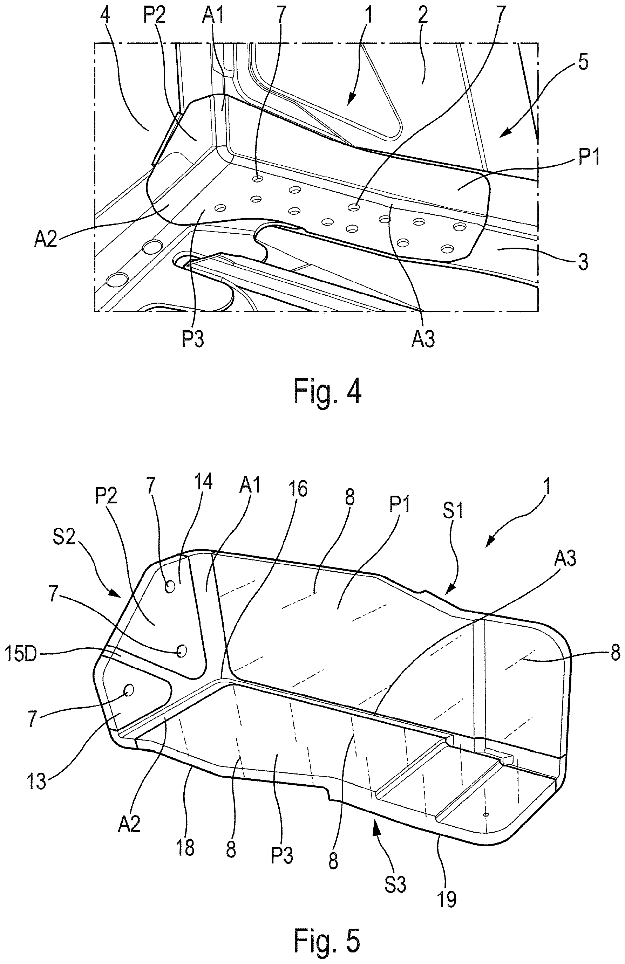

Selon un premier mode de réalisation, la pièce de coin 1 peut comporter au moins un joint torique 6 en matière flexible (figure 1). Le ou les joints toriques 6 sont surmoulés autour d'un site de perçage 8 (figure 5) destiné à être percé pour former une ouverture de fixation 7 configurée pour laisser un passage d'un élément de fixation 9 (figure 2). La ou les ouvertures de fixation 7 peuvent ainsi être réalisées lors de la fixation de la pièce de coin 1 sur les parois 2, 3, 4 du ou des caissons 5. Le ou les sites de perçage 8 peuvent aussi comprendre au moins un avant-trou. Le ou les joints toriques 6 sont surmoulés autour du ou des avant-trous. Le ou les avant-trous peuvent être alésés pour former la ou les ouvertures de fixation 7 avant la fixation ou lors de la fixation de la pièce de coin 1 sur les parois 2, 3, 4 du ou des caissons 5. Ce mode de réalisation contribue à l'absorption des tolérances de montage. Le ou les avant-trous sont alésés vers leur diamètre final des ouvertures de fixation 7 une fois que la pièce de coin 1 est temporairement installée avant d'être fixée.

Selon un deuxième mode de réalisation, au moins une des au moins trois plaques de fixation P1, P2, P3 comprend au moins une ouverture de fixation 7 configurée pour laisser un passage d'un élément de fixation 9. Ce mode de réalisation permet d'éviter une étape d'ébavurage suite à la formation de la ou des ouvertures de fixation 7.

Dans ce deuxième mode de réalisation, la pièce de coin 1 peut comporter au moins un joint torique 6 en matière flexible (élastomère) surmoulé autour de la ou des ouvertures de fixation 7.

Dans le premier mode de réalisation et le deuxième mode de réalisation, la surface externe S1, S2, S3 de la ou des au moins trois plaques de fixation P1, P2, P3 présente une rainure circulaire 10 usinée autour de l'ouverture de fixation 7 ou de chacune des ouvertures de fixation 7 ou autour du site de perçage 8 ou de chacun des sites de perçage 8. Le ou les joints toriques 6 sont surmoulés au fond de chaque rainure circulaire 10 (figure 2).

De préférence, la rainure circulaire 10 présente une hauteur H1 inférieure à la hauteur h1 du ou des joints toriques 6 afin que le ou les joints toriques 6 puissent être compressés entre la ou les parois 2, 3, 4 du ou des caissons 5 et le fond de la rainure circulaire 10. La rainure circulaire 10 présente en outre une largeur L1 supérieure à la largeur ℓ1 du ou des joints toriques 6. Cette différence de largeur permet au joint torique 6 ou aux joints toriques 6 de pouvoir se déformer et de pouvoir s'étaler dans la rainure circulaire 10 lorsqu'il ou ils sont compressés entre la ou les parois 2, 3, 4 du ou des caissons 5 et le fond de la rainure circulaire 10. Cette possibilité de déformation et d'étalement est particulièrement avantageuse pour des matières flexibles incompressibles, telles qu'un élastomère. Elle permet au joint d'assurer l'étanchéité tout en permettant aux surfaces (surfaces externes S1, S2, S3 et surfaces de contact des parois 2, 3, 4 destinées à être en contact avec les surfaces externes S1, S2, S3) d'être en contact : le joint affleure lesdites surfaces. La figure 2 représente une coupe transversale d'un joint torique 6 surmoulé dans une rainure circulaire 10. En ligne pointillée, est représenté le joint torique 6 quand celui-ci n'est pas déformé. La figure 2 représente également le joint torique 6 en ligne continue quand le joint torique 6 est déformé lorsque la pièce de coin 1 est fixée sur les parois 2, 3, 4 du ou des caissons 5. La figure 2 représente en ligne continue la déformation 20 du joint torique 6.

Le premier mode de réalisation et le deuxième mode de réalisation peuvent être combinés. En effet, une pièce de coin peut comprendre une ou plusieurs plaques de fixation P1, P2 ou P3 comportant un ou plusieurs sites de perçage 8 et une ou plusieurs plaques de fixation P1, P2 ou P3 comportant une ou plusieurs ouvertures de fixation 7. Par ailleurs, une plaque de fixation P1, P2 ou P3 peut comprendre à la fois un ou plusieurs sites de perçage 8 et une ou plusieurs ouvertures de fixation 7.

La pièce de coin 1 peut aussi comporter au moins un cordon périphérique 11 d'étanchéité en matière flexible, telle qu'un élastomère. Le ou les cordons périphériques 11 partage en deux parties chaque surface externe S1, S2, S3 tout en formant globalement une boucle fermée. Le ou les cordons périphériques 11 assurent une étanchéité continue au fluide (carburant) tout autour de la pièce de coin 1 entre les deux parties séparées par le cordon périphérique 11 considéré au niveau de chaque surface externe S1, S2, S3. Ainsi, aucun fluide ne peut circuler d'une zone avec du fluide vers une zone sans fluide.

De manière avantageuse, la pièce de coin 1 comporte au moins deux cordons périphériques 11 comme représenté sur la figure 1.

Pour le ou les cordons périphériques 11, la pièce de coin 1 comporte au moins une rainure périphérique 12 sur la surface externe S1, S2, S3 de chacune des au moins trois plaques de fixation P1, P2, P3. Ainsi, la ou les rainures périphériques 12 forment chacune une boucle fermée faisant le tour de la pièce de coin 1 en passant sur chacune des surfaces externe S1, S2, S3. Autrement dit, chacune des rainures périphérique 12 partage en deux parties chaque surface externe S1, S2, S3 tout en formant globalement une boucle fermée. Le ou les cordons périphériques 11 sont surmoulés respectivement au fond d'une rainure périphérique 12. Un seul cordon périphérique 11 est surmoulé au fond de chacune des rainures périphériques 12. De préférence et pour la même raison que le ou les joints toriques 6, la rainure périphérique 12 présente une largeur L2 supérieure à la largeur ℓ2 du ou des cordons périphériques 11 et une hauteur H2 inférieure à la hauteur h2 du ou des cordons périphériques 11. La figure 3 représente une coupe transversale d'un cordon périphérique 11 surmoulée dans une rainure périphérique 12. En ligne pointillée, est représenté le cordon périphérique 11 quand celui-ci n'est pas déformé. La figure 3 représente également le cordon périphérique 11 en ligne continue quand le cordon périphérique 11 est déformé lorsque la pièce de coin 1 est fixée sur les parois 2, 3, 4 du ou des caissons 5. La figure 3 représente en ligne continue la déformation 21 du cordon périphérique 11. Le cordon périphérique 11 déformé permet d'assurer l'étanchéité tout en permettant le contact entre les surfaces externes S1, S2, S3 et surfaces de contact des parois 2, 3, 4.

Lorsque plusieurs cordons périphériques 11 (par exemple trois cordons périphériques) sont prévus, un premier cordon périphérique est entouré d'un deuxième cordon périphérique. Un troisième cordon périphérique entoure, à la fois, le premier cordon périphérique et le deuxième cordon périphérique et ainsi de suite. Comme représenté sur la figure 1, le ou les cordons périphériques 11 peuvent comprendre au moins une portion commune 17 avec un ou des joints toriques 6. Dans ce cas, la ou les rainures périphériques 12 destinées à recevoir un cordon périphérique 11 peuvent comprendre une portion commune avec une ou des rainures circulaires 10 destinées à recevoir un joint torique 6.

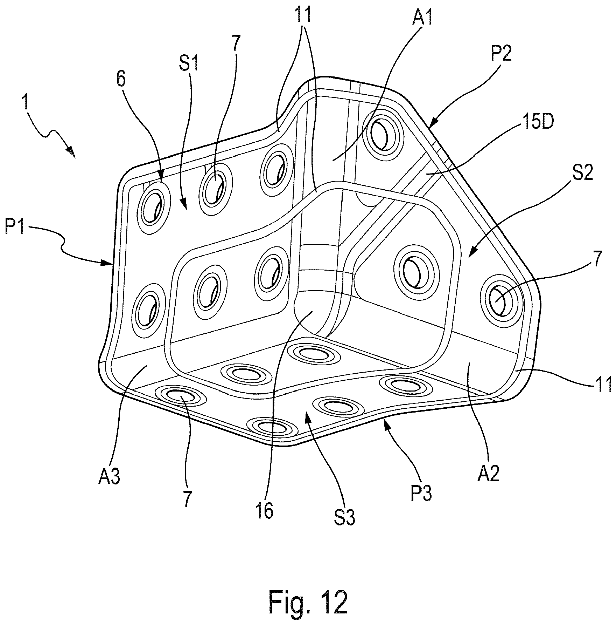

Au niveau des arêtes A1, A2, A3 en matière flexible, le ou les cordons périphériques 11 peuvent être en surépaisseur sur la ou les arêtes, comme représenté sur la figure 1 et la figure 12.

Dans un mode de réalisation, au moins une plaque de fixation S1, S2, S3 comprend au moins deux portions 13, 14 connectées entre elles par un joint de séparation 15D, 15C en matière flexible, tel qu'en élastomère. Le joint de séparation 15D, 15C en matière flexible est connecté à une de ses extrémités à au moins une arête A1, A2, A3 de la pièce de coin 1 (figure 6). Le nombre de portions 13, 14 peut être fonction du nombre de surfaces de contact des parois 2, 3, 4 contre lesquelles la pièce de coin 1 doit être fixée. Le joint de séparation 15D peut correspondre à un joint droit 15D comme représenté sur la figure 1 pour les plaques P1 et P3, sur la figure 5 pour la plaque P2, sur la figure 6 pour les plaques P1, P2 et P3 et sur la figure 12 pour la plaque P2. Le joint de séparation 15C peut aussi correspondre à un joint courbe 15C comme représenté sur la figure 1 pour la plaque P2.

La surface externe S1, S2, S3 d'au moins une des plaques de fixation P1, P2, P3 peut comprendre plusieurs surfaces d'appui 18, 19 de hauteur différentes contre lesquelles la pièce de coin 1 entre en contact avec la ou les parois 2, 3, 4 du ou des caissons 5. La différence de hauteur entre les surfaces d'appui 18, 19 permet à la pièce de coin 1 de s'adapter à différentes hauteurs des parois 2, 3, 4. Par exemple, sur la figure 5, la plaque de fixation P3 possède une surface externe S3 comprenant deux surfaces d'appui 18, 19 de hauteurs différentes. La flexibilité de la pièce de coin 1 permet de faciliter l'absorption des tolérances de montage de la pièce de coin 1 dont les surfaces externe S1, S2, S3 présentent plusieurs surface d'appui 18, 19. Selon un mode de réalisation, les portions 13, 14 de plaque de fixation P1, P2, P3 peuvent correspondre à des portions 13, 14 présentant des surfaces d'appui 18, 19 différentes. Ces portions 13, 14 sont donc connectées entre elles par des joints de séparation 15D, 15C comme représenté sur la figure 6. Les joints de séparation 15D, 15C contribuent à améliorer l'absorption des tolérances de montage.

La pièce de coin 1 peut également être utilisée dans un mode de fixation par cisaillement et par double recouvrement (« double lap shear » en anglais) comme représenté sur la figure 10. Dans ce mode de fixation, une paroi 2 peut présenter une forme de L présentant une première branche P1a et une deuxième branche P1b. Une paroi 3 peut se trouver dans le prolongement de deuxième branche P1b du L. Dans ce cas, une plaque de fixation P1 est fixée sur la première branche P1a du L de la paroi 2 et une plaque de fixation P2 est fixée sur la deuxième branche P1b du L et sur la paroi 3. Une plaque 91 est également fixée afin que la deuxième branche P1b et au moins une partie de la paroi 3 soient prises en sandwich entre la plaque de fixation P2 et la plaque 91 à l'aide d'éléments de fixation 9.

La pièce de coin 1 permet également l'utilisation de couches en fibres de verre dans le cas où les au moins trois plaques de fixation P1, P2, P3 sont fabriquées en une matière présentant un potentiel galvanique différent du potentiel galvanique de la ou des parois 2 3, 4 du ou des caissons 5. Une couche de fibres de verre peut être insérée entre les deux. Cela peut être le cas quand les au moins trois plaques de fixation P1, P2, P3 sont fabriquées en aluminium et la ou les parois 2, 3, 4 sont fabriquées en composite de fibres de carbone.

Dans le cas où il existerait des cavités entre la pièce de coin 1 et la ou les parois 2, 3, 4, il est également possible de remplir ces cavités par un liquide de correction (« shimming liquid » en anglais), un lubrifiant ou tout autre manière inerte afin d'éviter de la moisissure et la corrosion.

L'invention concerne également un procédé de fabrication d'une pièce de coin 1.

Le procédé comprend une étape E1 de mise en place d'au moins trois plaques de fixation P1, P2, P3 présentant une surface externe S1, S2, S3 destinée à être fixée respectivement à une paroi 2, 3, 4 du ou des caissons 5. Chacune des au moins trois plaques de fixation P1, P2, P3 est mise en place de façon que chaque surface externe S1, S2, S3 soit configurée pour pouvoir être fixée respectivement à une paroi 2, 3, 4 du ou des caissons 5.

Le procédé comprend également une étape E2 de surmoulage dans un moule d'au moins une arête A1, A2, A3 à au moins trois plaques de fixation P1, P2, P3 de façon que chacune des au moins trois plaques de fixation P1, P2, P3 soit connectée à chacune des autres au moins trois plaques de fixation P1, P2, P3 par une arête A1, A2, A3 en matière flexible.

L'étape E2 de surmoulage comprend également le surmoulage d'au moins un joint torique 6 en matière flexible, d'au moins un cordon périphérique 11 en matière flexible et/ou d'au moins un joint de séparation 15D, 15C en matière flexible.

L'étape E2 de surmoulage peut comprendre l'application d'un adhésif sur les au moins trois plaques de fixation P1, P2, P3 avant l'introduction des parties en matière flexible (élastomère). L'adhésif permet de créer des liaisons chimiques pendant l'étape E2 de surmoulage dans le moule présentant des propriétés de résistance à des sollicitations mécaniques (tension, cisaillement, etc.) sensiblement équivalentes à la résistance mécanique de la matière flexible (élastomère).

## Revendications

1. Pièce de coin flexible destinée à contribuer à une liaison entre au moins trois parois d'au moins un caisson d'aéronef, la pièce de coin flexible comportant au moins trois plaques de fixation (P1, P2, P3) et au moins trois arêtes (A1, A2, A3) en matière flexible, chacune des au moins trois plaques de fixation (P1, P2, P3) présentant une surface externe (S1, S2, S3) destinée à être fixée respectivement à une paroi (2, 3, 4) du ou des caissons (5), chacune des au moins trois plaques de fixation (P1, P2, P3) étant connectée à chacune des autres au moins trois plaques de fixation (P1, P2, P3) par une arête (A1, A2, A3) en matière flexible, **caractérisée en ce que** les trois plaques de fixation (P1, P2, P3) sont fabriquées dans une matière plus rigide que la matière flexible des arêtes permettant un mouvement d'une plaque par rapport à une autre.

2. Pièce de coin selon la revendication 1,
**caractérisée en ce qu'**au moins une des au moins trois plaques de fixation (P1, P2, P3) comprend au moins un site de perçage (8) destiné à être percé pour former une ouverture de fixation (7) configurée pour laisser un passage d'un élément de fixation (9), la pièce de coin (1) comportant au moins un joint torique (6) en matière flexible surmoulé autour d'au moins un site de perçage (8), la surface externe (S1, S2, S3) des au moins trois plaques (P1, P2, P3) présentant une rainure circulaire (10) usinée autour du ou des sites de perçage (8), le ou les joints toriques (6) étant surmoulés au fond de la rainure circulaire (10).

3. Pièce de coin selon l'une quelconque des revendications 1 et 2,
**caractérisée en ce qu'**au moins une des au moins trois plaques de fixation (P1, P2, P3) comprend au moins une ouverture de fixation (7) configurée pour laisser un passage d'un élément de fixation (9), la pièce de coin (1) comportant au moins un joint torique (6) en matière flexible surmoulé autour d'au moins une ouverture de fixation (7), la surface externe (S1, S2, S3) de la ou des au moins trois plaques (P1, P2, P3) présentant une rainure circulaire (10) usinée autour de la ou des ouvertures (7), le ou les joints toriques (6) étant surmoulés au fond de la rainure circulaire (10).

4. Pièce selon l'une quelconque des revendications 1 à 3,
**caractérisée en ce qu'**elle comporte au moins un cordon périphérique (11) d'étanchéité en matière flexible, le ou les cordons périphériques (11) partageant en deux parties chaque surface externe (S1, S2, S3) tout en formant globalement une boucle fermée, la pièce de coin (1) comportant au moins une rainure périphérique (12) passant sur la surface externe (S1, S2, S3) de chacune des au moins trois plaques de fixation (P1, P2, P3), la ou les rainures périphériques (12) formant chacune une boucle fermée faisant le tour de la pièce de coin (1) en passant sur chacune des surfaces externe (S1, S2, S3), un seul cordon périphérique (11) étant surmoulé au fond de chacune des rainures périphériques (12).

5. Pièce de coin selon l'une quelconque des revendications 1 à 4,
**caractérisée en ce que** au moins une plaque de fixation (P1, P2, P3) comprend au moins deux portions (13, 14) connectées entre elles par un joint de séparation (15D, 15C) en matière flexible, le joint de séparation (15D, 15C) en matière flexible étant connecté à au moins une arête (A1, A2, A3) de la pièce de coin (1).

6. Pièce de coin selon l'une quelconque des revendications 1 à 5,
**caractérisé en ce que** la matière flexible correspond à un matériau hyperélastique incompressible.

7. Pièce de coin selon l'une quelconque des revendications 1 à 6,
**caractérisée en ce que** la matière flexible correspond à un élastomère.

8. Aéronef,
**caractérisé en ce qu'**il comprend au moins un caisson présentant au moins un coin sur lequel est fixée une pièce de coin selon l'une quelconque des revendications 1 à 7.

9. Procédé de fabrication d'une pièce de coin flexible destinée à contribuer à une liaison entre au moins trois parois d'au moins un caisson d'aéronef, comportant les étapes suivantes :
- une étape (E1) de mise en place d'au moins trois plaques de fixation (P1, P2, P3) présentant une surface externe (S1, S2, S3) destinée à être fixée respectivement à une paroi (2, 3, 4) du ou des caissons (5), chacune des au moins trois plaques de fixation (P1, P2, P3) étant mise en place de façon que chaque surface externe (S1, S2, S3) soit configurée pour pouvoir être fixée respectivement à une paroi (2, 3, 4) du ou des caissons (5),
- une étape (E2) de surmoulage d'au moins une arête (A1, A2, A3) à au moins trois plaques de fixation (P1, P2, P3) de façon que chacune des au moins trois plaques de fixation (P1, P2, P3) soit connectée à chacune des autres au moins trois plaques de fixation (P1, P2, P3) par une arête (A1, A2, A3) en matière flexible, la matière des plaques de fixation étant plus rigide que la matière des arêtes.

## Patentansprüche

1. Flexibles Eckstück, das dazu bestimmt ist, zu einer Verbindung zwischen mindestens drei Wänden mindestens eines Luftfahrzeuggehäuses beizutragen, wobei das flexible Eckstück mindestens drei Befestigungsplatten (P1, P2, P3) und mindestens drei Kanten (A1, A2, A3) aus flexiblem Material aufweist, wobei jede der mindestens drei Befestigungsplatten (P1, P2, P3) eine Außenfläche (S1, S2, S3) aufweist, die dazu vorgesehen ist, an jeweils einer Wand (2, 3, 4) des bzw. der Gehäuse(s) (5) befestigt zu werden, wobei jede der mindestens drei Befestigungsplatten (P1, P2, P3) durch eine Kante (A1, A2, A3) aus flexiblem Material mit jeder der anderen mindestens drei Befestigungsplatten (P1, P2, P3) verbunden ist, **dadurch gekennzeichnet, dass** die drei Befestigungsplatten (P1, P2, P3) aus einem steiferen Material als dem flexiblen Material der Kanten hergestellt sind, wodurch eine Bewegung einer Platte relativ zu einer anderen ermöglicht wird.

2. Eckstück nach Anspruch 1,
**dadurch gekennzeichnet, dass** mindestens eine der mindestens drei Befestigungsplatten (P1, P2, P3) mindestens eine Bohrstelle (8) umfasst, die dazu bestimmt ist, durchbohrt zu werden, um eine Befestigungsöffnung (7) zu bilden, die dazu konfiguriert ist, einen Durchgang eines Befestigungselements (9) zuzulassen, wobei das Eckstück (1) mindestens einen O-Ring (6) aus flexiblem Material aufweist, der um die mindestens eine Bohrstelle (8) herum aufgeformt ist, wobei die Außenfläche (S1, S2, S3) der mindestens drei Platten (P1, P2, P3) eine kreisförmige Nut (10) aufweist, die um die Bohrstelle(n) (8) herum ausgebildet ist, wobei der bzw. die O-Ring(e) (6) auf den Boden der kreisförmigen Nut (10) aufgeformt sind.

3. Tragflügel nach einem der Ansprüche 1 und 2,
**dadurch gekennzeichnet, dass** mindestens eine der mindestens drei Befestigungsplatten (P1, P2, P3) mindestens eine Befestigungsöffnung (7) umfasst, die dazu konfiguriert ist, einen Durchgang eines Befestigungselements (9) zuzulassen, wobei das Eckstück (1) mindestens einen O-Ring (6) aus flexiblem Material aufweist, der um mindestens eine Befestigungsöffnung (7) herum aufgeformt ist, wobei die Außenfläche (S1, S2, S3) der einen bzw. der mindestens drei Platte (n) (P1, P2, P3) eine kreisförmige Nut (10) aufweist, die um die Öffnung(en) (7) herum ausgebildet ist, wobei der bzw. die O-Ring(e) (6) auf den Boden der kreisförmigen Nut (10) aufgeformt sind.

4. Tragflügel nach einem der Ansprüche 1 und 3,
**dadurch gekennzeichnet, dass** er mindestens ein umlaufendes Dichtungsband (11) aus flexiblem Material aufweist, wobei das umlaufende Band bzw. die umlaufenden Bänder (11) jede Außenfläche (S1, S2, S3) in zwei Teile unterteilen und dabei insgesamt eine geschlossene Schleife bilden, wobei das Eckstück (1) mindestens eine umlaufende Nut (12) aufweist, die an der Außenfläche (S1, S2, S3) jeder der mindestens drei Befestigungsplatten (P1, P2, P3) verläuft, wobei die umlaufende(n) Nut(en) (12) jeweils eine geschlossene Schleife bilden, die um das Eckstück (1) herum über jede der Außenflächen (S1, S2, S3) verläuft, wobei auf den Boden jeder der umlaufenden Nuten (12) ein einzelnes umlaufendes Band (11) aufgeformt ist.

5. Eckstück nach einem der Ansprüche 1 bis 4,
**dadurch gekennzeichnet, dass** mindestens eine Befestigungsplatte (P1, P2, P3) mindestens zwei Abschnitte (13, 14) umfasst, die durch eine Trennfuge (15D, 15C) aus flexiblem Material miteinander verbunden sind, wobei die Trennfuge (15D, 15C) aus flexiblem Material mit mindestens einer Kante (A1, A2, A3) des Eckstücks (1) verbunden ist.

6. Eckstück nach einem der Ansprüche 1 bis 5, **dadurch gekennzeichnet, dass** das flexible Material einem hyperelastischen, nicht komprimierbaren Material entspricht.

7. Eckstück nach einem der Ansprüche 1 bis 6,
**dadurch gekennzeichnet, dass** das flexible Material einem Elastomer entspricht.

8. Luftfahrzeug,
**dadurch gekennzeichnet, dass** es mindestens ein Gehäuse mit mindestens einer Ecke aufweist, an der ein Eckstück nach einem der Ansprüche 1 bis 7 befestigt ist.

9. Verfahren zur Herstellung eines flexiblen Eckstücks, das dazu vorgesehen ist, zu einer Verbindung zwischen mindestens drei Wänden mindestens eines Luftfahrzeuggehäuses beizutragen, umfassend die folgenden Schritte:
- einen Schritt (E1) des Anordnens von mindestens drei Befestigungsplatten (P1, P2, P3), die eine Außenfläche (S1, S2, S3) aufweisen, die dazu vorgesehen ist, jeweils an einer Wand (2, 3, 4) des bzw. der Gehäuse(s) (5) befestigt zu werden, wobei jede der mindestens drei Befestigungsplatten (P1, P2, P3) so angeordnet wird, dass jede Außenfläche (S1, S2, S3) dazu konfiguriert ist, jeweils an einer Wand (2, 3, 4) des bzw. der Gehäuse(s) (5) befestigt werden zu können,
- einen Schritt (E2) des Aufformens mindestens einer Kante (A1, A2, A3) auf mindestens drei Befestigungsplatten (P1, P2, P3), sodass jede der mindestens drei Befestigungsplatten (P1, P2, P3) durch eine Kante (A1, A2, A3) aus flexiblem Material mit jeder anderen der mindestens drei Befestigungsplatten (P1, P2, P3) verbunden ist, wobei das Material der Befestigungsplatten steifer als das Material der Kanten ist.

## Claims

1. Flexible corner fitting intended to contribute to a connection between at least three walls of at least one aircraft box structure, the flexible corner fitting comprising at least three fixing plates (P1, P2, P3) and at least three edge corners (A1, A2, A3) made of flexible material, each of the at least three fixing plates (P1, P2, P3) having an outer surface (S1, S2, S3) intended to be fixed respectively to a wall (2, 3, 4) of the one or more box structures (5), each of the at least three fixing plates (P1, P2, P3) being connected to each of the other at least three fixing plates (P1, P2, P3) by an edge corner (A1, A2, A3) made of flexible material, **characterized in that** the three fixing plates (P1, P2, P3) are manufactured from a stiffer material than the flexible material of the edge corners, enabling a movement of one plate relative to another plate.

2. Corner fitting according to Claim 1,
**characterized in that** at least one of the at least three fixing plates (P1, P2, P3) comprises at least one drilling site (8) intended to be drilled so as to form a fixing opening (7) configured to allow a fixing element (9) to pass through, the corner fitting (1) having at least one O-ring (6) made of flexible material overmoulded around at least one drilling site (8), the outer surface (S1, S2, S3) of the at least three plates (P1, P2, P3) having a circular groove (10) machined around the one or more drilling sites (8), the one or more O-rings (6) being overmoulded on the bottom of the circular groove (10).

3. Corner fitting according to either one of Claims 1 and 2,
**characterized in that** at least one of the at least three fixing plates (P1, P2, P3) comprises at least one fixing opening (7) configured to allow a fixing element (9) to pass through, the corner fitting (1) having at least one O-ring (6) made of flexible material overmoulded around at least one fixing opening (7), the outer surface (S1, S2, S3) of the plate or of the at least three plates (P1, P2, P3) having a circular groove (10) machined around the one or more openings (7), the one or more O-rings (6) being overmoulded on the bottom of the circular groove (10) .

4. Fitting according to any one of Claims 1 to 3,
**characterized in that** it has at least one peripheral sealing strip (11) made of flexible material, the one or more peripheral strips (11) dividing each outer surface (S1, S2, S3) into two parts whilst still forming a closed loop overall, the corner fitting (1) having at least one peripheral groove (12) passing over the outer surface (S1, S2, S3) of each of the at least three fixing plates (P1, P2, P3), the one or more peripheral grooves (12) each forming a closed loop passing all around the corner fitting (1), in the process passing over each of the outer surfaces (S1, S2, S3), a single peripheral strip (11) being overmoulded on the bottom of each of the peripheral grooves (12).

5. Corner fitting according to any one of Claims 1 to 4,
**characterized in that** at least one fixing plate (P1, P2, P3) comprises at least two portions (13, 14) connected to one another by a separation joint (15D, 15C) made of flexible material, the separation joint (15D, 15C) made of flexible material being connected to at least one edge corner (A1, A2, A3) of the corner fitting (1).

6. Corner fitting according to any one of Claims 1 to 5, **characterized in that** the flexible material corresponds to an incompressible hyperelastic material.

7. Corner fitting according to any one of Claims 1 to 6,
**characterized in that** the flexible material corresponds to an elastomer.

8. Aircraft,
**characterized in that** it comprises at least one box structure having at least one corner to which is fixed a corner fitting according to any one of Claims 1 to 7.

9. Process for manufacturing a flexible corner fitting intended to contribute to a connection between at least three walls of at least one aircraft box structure, comprising the following steps:
- a step (E1) of installing at least three fixing plates (P1, P2, P3) having an outer surface (S1, S2, S3) intended to be fixed respectively to a wall (2, 3, 4) of the one or more box structures (5), each of the at least three fixing plates (P1, P2, P3) being installed such that each outer surface (S1, S2, S3) is configured to be able to be fixed respectively to a wall (2, 3, 4) of the one or more box structures (5),
- a step (E2) of overmoulding at least one edge corner (A1, A2, A3) on at least three fixing plates (P1, P2, P3) such that each of the at least three fixing plates (P1, P2, P3) is connected to each of the other at least three fixing plates (P1, P2, P3) by an edge corner (A1, A2, A3) made of flexible material, the material of the fixing plates being stiffer than the material of the edge corners.
